# EUROPÄISCHE PATENTANMELDUNG

(11) **EP 3 301 405 A1**
(43) Veröffentlichungstag der Anmeldung: **04.04.2018**
(21) Anmeldenummer: 16191465.0
(22) Anmeldetag: 29.09.2016
(51) Int. Cl.: G01D 11/24, G01D 11/30

(54) **VERBINDEN EINER MOTORWELLE EINES MOTORS MIT EINEM DREHGEBER**

(71) Anmelder: Siemens Aktiengesellschaft, 80333 München (DE)
(72) Erfinder: Haun, Dominik, 97688 Bad Kissingen (DE); Schneider, Helmut, 97688 Bad Kissingen (DE)

(57) **Zusammenfassung**

Die Erfindung betrifft ein Verbindungselement (17) zum Verbinden einer Motorwelle (5) eines Motors (1) mit einer Geberwelle (19) eines Drehgebers (15), der zum Erfassen einer Drehstellung und/oder einer Drehzahl der Motorwelle (5) ausgebildet ist. Das Verbindungselement (17) weist einen ringförmig um eine Verbindungsachse (37) verlaufenden Verbindungsbereich (39) mit zwei sich axial gegenüberliegenden Stirnseiten (43, 45), einer von der Verbindungsachse (37) abgewandeten Außenseite (47) und einer der Verbindungsachse (37) zugewandeten Innenseite (49) auf. Ferner weist das Verbindungselement (17) wenigstens einen radial von der Außenseite (47) des Verbindungsbereichs (39) abstehenden Lüfterflügel (41) auf.

## Beschreibung

Die Erfindung betrifft die Verbindung einer Motorwelle eines Motors mit einem Drehgeber, der zum Erfassen einer Drehstellung und/oder einer Drehzahl der Motorwelle ausgebildet ist.

Motoren weisen häufig einen Drehgeber zum Erfassen einer Drehstellung und/oder einer Drehzahl einer Motorwelle des Motors auf. Ein Drehgeber eines Motors ist häufig hohen Temperaturen ausgesetzt, die durch den Betrieb des Motors entstehen und einen Ausfall des Drehgebers aufgrund einer Übertemperatur bewirken können.

Der Erfindung liegt die Aufgabe zugrunde, eine verbesserte Verbindung einer Motorwelle eines Motors mit einem Drehgeber, der zum Erfassen einer Drehstellung und/oder einer Drehzahl der Motorwelle ausgebildet ist, anzugeben.

Die Aufgabe wird erfindungsgemäß durch ein Verbindungselement mit den Merkmalen des Anspruchs 1 gelöst.

Vorteilhafte Ausgestaltungen der Erfindung sind Gegenstand der von Anspruch 1 abhängigen Ansprüche.

Ein erfindungsgemäßes Verbindungselement ist zum Verbinden einer Motorwelle eines Motors mit einer Geberwelle eines Drehgebers, der zum Erfassen einer Drehstellung und/oder einer Drehzahl der Motorwelle ausgebildet ist, ausgebildet. Das Verbindungselement weist einen ringförmig um eine Verbindungsachse verlaufenden Verbindungsbereich mit zwei sich axial gegenüberliegenden Stirnseiten, einer von der Verbindungsachse abgewandeten Außenseite und einer der Verbindungsachse zugewandeten Innenseite auf. Von der Außenseite des Verbindungsbereichs steht wenigstens ein Lüfterflügel radial ab. Das Verbindungselement ermöglicht vorteilhaft gleichzeitig eine Verbindung einer Motorwelle eines Motors mit der Geberwelle eines Drehgebers und eine Kühlung des Drehgebers. Die Kühlung wird durch wenigstens einen Lüfterflügel bewirkt, der außen an dem Verbindungselement angeordnet ist. Bei einer Drehung der Motorwelle wird das Verbindungselement und damit auch der wenigstens eine Lüfterflügel in Drehung versetzt, so dass der Lüfterflügel einen Luftstrom im Bereich des Drehgebers erzeugt, der den Drehgeber kühlt. Dabei ergibt sich eine Kühlung des Drehgebers vorteilhaft genau dann, wenn die Kühlung des Drehgebers benötigt wird, nämlich wenn der Motor in Betrieb ist, so dass sich die Motorwelle dreht. Für die Kühlung durch den wenigstens einen Lüfterflügel wird daher insbesondere kein zusätzlicher Leistungsanschluss benötigt.

Eine Ausgestaltung der Erfindung sieht mehrere radial von der Außenseite des Verbindungsbereichs abstehende Lüfterflügel vor, die regelmäßig entlang eines Kreises um die Verbindungsachse herum verteilt sind. Durch mehrere Lüfterflügel wird die Kühlfunktion des Verbindungselements vorteilhaft gegenüber nur einem Lüfterflügel vergrößert. Eine regelmäßige Verteilung der Lüfterflügel am Umfang des Verbindungselements verhindert vorteilhaft Unwuchten durch eine unregelmäßige Verteilung der Lüfterflügel.

Eine weitere Ausgestaltung der Erfindung sieht vor, dass jeder Lüfterflügel im Wesentlichen die Form eines Prismas mit einer dreieckigen Grundfläche, die senkrecht von der Außenseite des Verbindungsbereichs absteht, hat. Dadurch werden vorteilhaft eine einfache Herstellung und eine stabile Gestaltung der Lüfterflügel ermöglicht.

Eine weitere Ausgestaltung der Erfindung sieht vor, dass jede Stirnseite des Verbindungsbereichs wenigstens eine Kopplungsaussparung aufweist, die radial von der Innenseite zu der Außenseite des Verbindungsbereichs verläuft. Die Kopplungsaussparungen ermöglichen vorteilhaft formschlüssige Verbindungen des Verbindungselements mit der Motorwelle und der Geberwelle durch von der Motorwelle und der Geberwelle abstehende Motorwellen- bzw. Geberwellennasen, die radial in die Kopplungsaussparungen hineinragen. Insbesondere ermöglichen derartige formschlüssige Verbindungen des Verbindungselements mit der Motorwelle und der Geberwelle axiale Verschiebungen der Motorwelle und der Geberwelle relativ zu dem Verbindungselement, so dass durch das Verbindungselement temperaturbedingte Längenänderungen der Motorwelle und der Geberwelle kompensiert werden können.

Eine weitere Ausgestaltung der Erfindung sieht vor, dass jede Stirnseite des Verbindungsbereichs genau zwei sich radial gegenüberliegende Kopplungsaussparungen aufweist. Die beiden Kopplungsaussparungen einer ersten Stirnseite sind dabei beispielsweise um 90 Grad gegenüber den Kopplungsaussparungen der zweiten Stirnseite versetzt. Dadurch wird die Stabilität der formschlüssigen Verbindungen des Verbindungselements mit der Motorwelle und der Geberwelle vorteilhaft erhöht. Ferner wird eine symmetrische Belastung des Verbindungselements durch die Motorwelle und die Geberwelle erreicht.

Eine weitere Ausgestaltung der Erfindung sieht vor, dass jede Kopplungsaussparung eine axiale Tiefe aufweist, die etwa halb so groß wie die axiale Ausdehnung des Verbindungsbereichs ist. Dadurch wird vorteilhaft einerseits verhindert, dass eine zu große axiale Tiefe der Kopplungsaussparungen die Stabilität des Verbindungselements deutlich reduziert, und andererseits wird eine ausreichende Tiefe der Kopplungsaussparungen realisiert, die zuverlässige formschlüssige Verbindungen des Verbindungselements mit der Motorwelle und der Geberwelle ermöglicht.

Eine weitere Ausgestaltung der Erfindung sieht vor, dass der Verbindungsbereich wenigstens eine axial verlaufende rillenartige Vertiefung in jeder eine Kopplungsaussparung berandenden Wandung aufweist, die von einer Stirnseite des Verbindungsbereichs ausgeht. Derartige rillenartige Vertiefungen in Wandungen der Kopplungsaussparungen erleichtern vorteilhaft axiale Verschiebungen des Motorwellenendes und des Geberwellenendes relativ zu dem Verbindungselement zum Ausgleich temperaturbedingter Längenänderungen durch eine Verringerung der Reibung zwischen dem Verbindungselement und der Motorwelle und der Geberwelle. Die Verringerung der Reibung wird einerseits dadurch erreicht, dass die Größe der Reibungsflächen zwischen dem Verbindungselement und der Motorwelle und zwischen dem Verbindungselement und der Geberwelle reduziert wird. Ferner können die Vertiefungen ein Schmiermittel aufnehmen, das zur Schmierung der Kopplungsaussparungen verwendet wird, und dadurch die Reibung zwischen dem Verbindungselement und der Motorwelle und der Geberwelle weiter reduzieren.

Eine weitere Ausgestaltung der Erfindung sieht vor, dass der Verbindungsbereich wenigstens eine Ausnehmung aufweist, die von einer Stirnseite aus axial und von der Außenseite und von der Innenseite beabstandet verläuft. Dadurch können vorteilhaft die Masse des Verbindungselements reduziert und die Stabilität des Verbindungselements erhöht werden.

Eine weitere Ausgestaltung der Erfindung sieht vor, dass das Verbindungselement einstückig ausgeführt ist. Dadurch können vorteilhaft die Stabilität des Verbindungselements erhöht und die Herstellungskosten des Verbindungselements gesenkt werden.

Eine weitere Ausgestaltung der Erfindung sieht vor, dass das Verbindungselement aus einem Kunststoff gefertigt ist. Dadurch können vorteilhaft die Masse und die Herstellungskosten des Verbindungselements beispielsweise gegenüber einer Fertigung des Verbindungselements aus Metall gesenkt werden.

Ein erfindungsgemäßer Motor weist eine Motorwelle mit einer Motorwellenlängsachse, einen Drehgeber zum Erfassen einer Drehstellung und/oder einer Drehzahl der Motorwelle und ein erfindungsgemäßes Verbindungselement auf. Der Drehgeber weist eine Geberwelle mit einer Geberwellenlängsachse auf. Das Verbindungselement verbindet ein geberwellenseitiges Motorwellenende der Motorwelle und ein motorwellenseitiges Geberwellenende der Geberwelle miteinander, indem es jeweils formschlüssig mit dem Motorwellenende und mit dem Geberwellenende verbunden ist, wobei eine erste Stirnseite des Verbindungsbereichs des Verbindungselements der Motorwelle zugewandt ist, die zweite Stirnseite des Verbindungsbereichs des Verbindungselements dem Drehgeber zugewandt ist und die Verbindungsachse des Verbindungselements mit der Motorwellenlängsachse und der Geberwellenlängsachse zusammenfällt.

Eine Ausgestaltung des Motors sieht vor, dass jede Stirnseite des Verbindungsbereichs wenigstens eine Kopplungsaussparung aufweist, die radial von der Innenseite zu der Außenseite des Verbindungsbereichs verläuft, das Motorwellenende für jede Kopplungsaussparung der ersten Stirnseite eine radial in die Kopplungsaussparung hineinragende Motorwellennase aufweist und das Geberwellenende für jede Kopplungsaussparung der zweiten Stirnseite eine radial in die Kopplungsaussparung hineinragende Geberwellennase aufweist.

Die Vorteile eines erfindungsgemäßen Motors ergeben sich aus den oben bereits genannten Vorteilen eines erfindungsgemäßen Verbindungselements.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Schnittdarstellung eines Motors mit einem Drehgeber,
FIG 2 einen vergrößerten Ausschnitt von Figur 1,
FIG 3 eine perspektivische Schnittdarstellung des in Figur 1 dargestellten Motors im Bereich des Drehgebers, und
FIG 4 eine perspektivische Darstellung eines Verbindungselements zum Verbinden einer Motorwelle eines Motors mit einer Geberwelle eines Drehgebers.

Einander entsprechende Teile sind in allen Figuren mit denselben Bezugszeichen versehen.

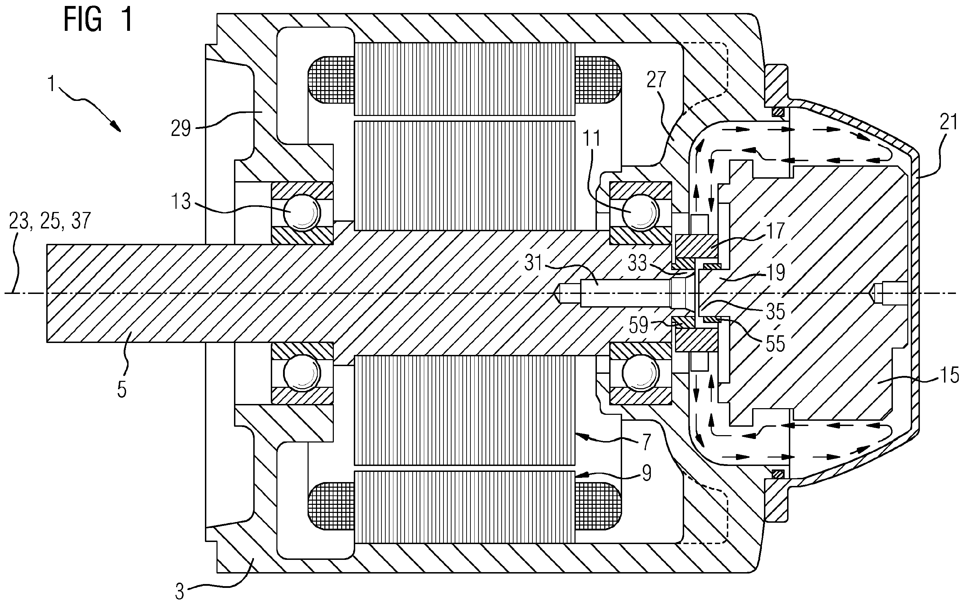

Figur 1 zeigt eine schematische Schnittdarstellung eines Motors 1, der ein Elektromotor ist. Der Motor 1 umfasst ein Motorgehäuse 3, eine Motorwelle 5, einen an der Motorwelle 5 angeordneten Rotor 7, einen um den Rotor 7 herum an dem Motorgehäuse 3 angeordneten Stator 9, zwei Motorwellenlager 11, 13 zur Lagerung der Motorwelle 5, einen Drehgeber 15 zum Erfassen einer Drehstellung und/oder einer Drehzahl der Motorwelle 5, ein Verbindungselement 17 zum Verbinden der Motorwelle 5 mit einer Geberwelle 19 des Drehgebers 15 und einen Geberdeckel 21.

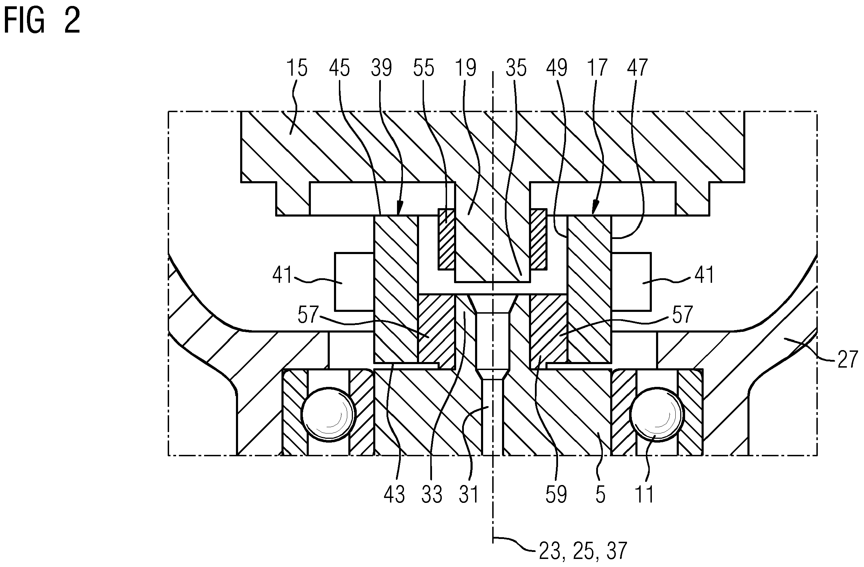

Figur 2 zeigt einen vergrößerten Ausschnitt von Figur 1 im Bereich des Verbindungselements 17.

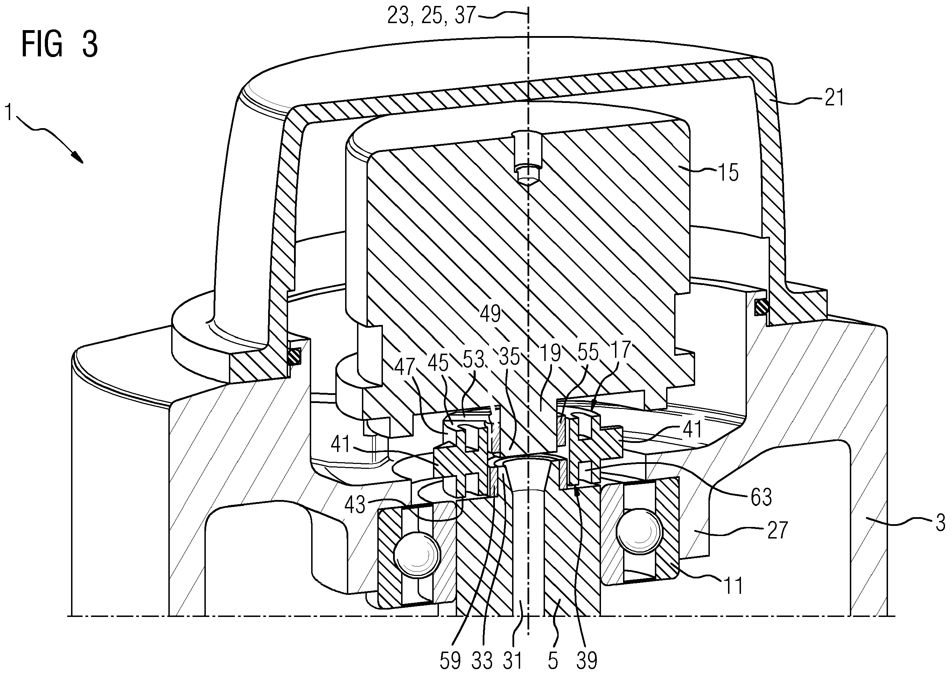

Figur 3 zeigt eine perspektivische Schnittdarstellung des in Figur 1 dargestellten Motors 1 im Bereich des Drehgebers 15.

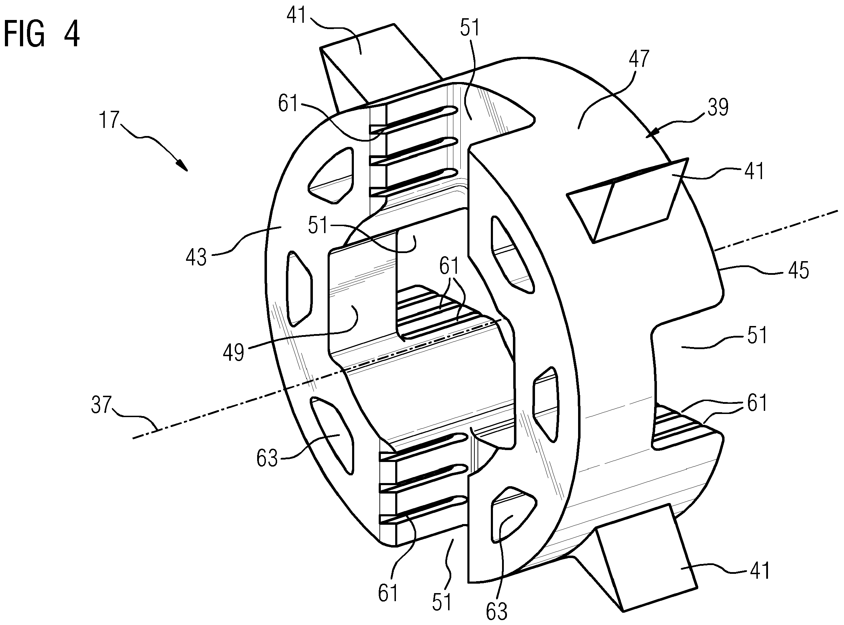

Figur 4 zeigt eine perspektivische Darstellung des Verbindungselements 17.

Die Motorwelle 5 ist durch die Motorwellenlager 11, 13 drehbar um eine Motorwellenlängsachse 23 der Motorwelle 5 gelagert. Ein erstes Motorwellenlager 11 ist an einem dem Drehgeber 15 zugewandeten ersten Lagerschild 27 des Motorgehäuses 3 angeordnet. Das zweite Motorwellenlager 13 ist an einem von dem Drehgeber 15 abgewandeten zweiten Lagerschild 29 des Motorgehäuses 3 angeordnet. Die Motorwelle 5 weist drehgeberseitig eine Bohrung 31 auf, die entlang der Motorwellenlängsachse 23 verläuft.

Der Drehgeber 15 ist drehbar um eine Geberwellenlängsachse 25 gelagert, die mit der Motorwellenlängsachse 23 zusammenfällt.

Der Geberdeckel 21 ist topfartig ausgebildet und verschließt ein drehgeberseitiges Ende des Motorgehäuses 3. Der Geberdeckel 21 schützt den Drehgeber 15 gegen Einflüsse aus der Umgebung des Motors 1.

Das Verbindungselement 17 verbindet ein geberwellenseitiges Motorwellenende 33 der Motorwelle 5 mit einem motorwellenseitigen Geberwellenende 35 der Geberwelle 19, so dass sich die Geberwelle 19 mit der Motorwelle 5 mitdreht. Das Motorwellenende 33 und das Geberwellenende 35 weisen zumindest annähernd gleiche Außendurchmesser auf und sind voneinander beabstandet.

Das Verbindungselement 17 weist einen ringförmig um eine Verbindungsachse 37 verlaufenden Verbindungsbereich 39 und mehrere Lüfterflügel 41 auf. Die Verbindungsachse 37 fällt mit der Motorwellenlängsachse 23 und der Gebenwellenlängsachse 25 zusammen. Der Verbindungsbereich 39 weist zwei sich axial gegenüberliegende Stirnseiten 43, 45, eine von der Verbindungsachse 37 abgewandete Außenseite 47 und eine der Verbindungsachse 37 zugewandete Innenseite 49 auf. Eine erste Stirnseite 43 des Verbindungsbereichs 39 ist der Motorwelle 5 zugewandt, die zweite Stirnseite 45 ist dem Drehgeber 15 zugewandt. Die Lüfterflügel 41 stehen radial von der Außenseite 47 des Verbindungsbereichs 39 ab. Die Begriffe radial und axial beziehen sich dabei auf die Verbindungsachse 37.

Die Lüfterflügel 41 sind regelmäßig entlang eines Kreises um die Verbindungsachse 47 herum auf der Außenseite 47 des Verbindungsbereichs 39 verteilt. In dem in Figur 4 dargestellten Ausführungsbeispiel weist das Verbindungselement 17 vier Lüfterflügel 41 auf. Alternative Ausführungsbeispiele des Verbindungselements 17 können aber auch eine andere Anzahl von Lüfterflügeln 41 aufweisen. Jeder Lüfterflügel 41 hat im Wesentlichen die Form eines Prismas mit einer dreieckigen Grundfläche, die senkrecht von der Außenseite 47 des Verbindungsbereichs 39 absteht. Die Lüfterflügel 41 erzeugen bei einer Drehung der Motorwelle 5 einen in Figur 1 durch Pfeile angedeuteten Luftstrom, der kältere Luft aus dem Bereich des Geberdeckels 21 um den Drehgeber 15 herum verteilt und dadurch den Drehgeber 15 vorteilhaft kühlt.

Jede Stirnseite 43, 45 des Verbindungsbereichs 39 des Verbindungselements 17 weist zwei Kopplungsaussparungen 51 auf, die jeweils radial von der Innenseite 49 zu der Außenseite 47 des Verbindungsbereichs 39 verlaufen und die sich radial gegenüberliegen. Die Kopplungsaussparungen 51 der ersten Stirnseite 43 sind um 90 Grad gegenüber den Kopplungsaussparungen 51 der zweiten Stirnseite 45 versetzt. Jede Kopplungsaussparung 51 weist eine axiale Tiefe auf, die etwa halb so groß wie die axiale Ausdehnung des Verbindungsbereichs 39 ist.

Das Geberwellenende 35 weist für jede Kopplungsaussparung 51 der zweiten Stirnseite 45 des Verbindungsbereichs 39 eine radial in die Kopplungsaussparung 51 hineinragende Geberwellennase 53 auf. Jede Geberwellennase 53 ist Teil eines Geberwellenaufsatzes 55, der das Geberwellenende 35 ringartig umgibt und auf das Geberwellenende 35 aufgepresst ist. Durch das Eingreifen der Geberwellennasen 53 in die Kopplungsaussparungen 51 der zweiten Stirnseite 45 des Verbindungsbereichs 39 ist das Geberwellenende 35 formschlüssig mit dem Verbindungselement 17 verbunden.

Analog dazu weist das Motorwellenende 33 für jede Kopplungsaussparung 51 der ersten Stirnseite 43 des Verbindungsbereichs 39 eine radial in die Kopplungsaussparung 51 hineinragende Motorwellennase 57 auf. Jede Motorwellennase 57 ist Teil eines Motorwellenaufsatzes 59, der das Motorwellenende 33 ringartig umgibt und auf das Motorwellenende 33 aufgepresst ist. Durch das Eingreifen der Motorwellennasen 57 in die Kopplungsaussparungen 51 der ersten Stirnseite 43 des Verbindungsbereichs 39 ist das Motorwellenende 33 formschlüssig mit dem Verbindungselement 17 verbunden.

Die formschlüssigen Verbindungen des Motorwellenendes 33 und des Geberwellenendes 35 mit dem Verbindungselement 17 ermöglichen axiale Verschiebungen des Motorwellenendes 33 und des Geberwellenendes 35 relativ zu dem Verbindungselement 17, so dass durch das Verbindungselement 17 temperaturbedingte Längenänderungen der Motorwelle 5 und der Geberwelle 19 kompensiert werden können.

Um derartige axiale Verschiebungen des Motorwellenendes 33 und des Geberwellenendes 35 relativ zu dem Verbindungselement 17 zu erleichtern, weist das Verbindungselement 17 axial verlaufende rillenartige Vertiefungen 61 in jeder eine Kopplungsaussparung 51 berandenden Wandung auf, die von einer Stirnseite 43, 45 des Verbindungsbereichs 39 ausgeht. Durch die Vertiefungen 61 wird vorteilhaft die Reibung zwischen dem Verbindungselement 17 und dem Motorwellenende 33 und dem Geberwellenende 35 verringert, indem die Größe der Reibungsflächen zwischen dem Verbindungselement 17 und dem Motorwellenende 33 und dem Geberwellenende 35 reduziert wird. Ferner können die Vertiefungen 61 ein Schmiermittel aufnehmen, das zur Schmierung der Kopplungsaussparungen 51 verwendet wird, und dadurch die Reibung zwischen dem Verbindungselement 17 und dem Motorwellenende 33 und dem Geberwellenende 35 weiter reduzieren.

Optional weist der Verbindungsbereich 39 mehrere Ausnehmungen 63 auf, die jeweils von einer Stirnseite 43, 45 aus axial und von der Außenseite 47 und von der Innenseite 49 beabstandet verlaufen. Dadurch kann die Masse des Verbindungselements 17 vorteilhaft reduziert werden.

Das Verbindungselement 17 ist vorzugsweise aus einem Kunststoff gefertigt, einstückig ausgeführt und wird beispielsweise in einem Spritzgießverfahren hergestellt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verbindungselement (17) zum Verbinden einer Motorwelle (5) eines Motors (1) mit einer Geberwelle (19) eines Drehgebers (15), der zum Erfassen einer Drehstellung und/oder einer Drehzahl der Motorwelle (5) ausgebildet ist, das Verbindungselement (17) aufweisend
- einen ringförmig um eine Verbindungsachse (37) verlaufenden Verbindungsbereich (39) mit zwei sich axial gegenüberliegenden Stirnseiten (43, 45), einer von der Verbindungsachse (37) abgewandeten Außenseite (47) und einer der Verbindungsachse (37) zugewandeten Innenseite (49)
- und wenigstens einen radial von der Außenseite (47) des Verbindungsbereichs (39) abstehenden Lüfterflügel (41).

2. Verbindungselement (17) nach Anspruch 1,
**gekennzeichnet durch** mehrere radial von der Außenseite (47) des Verbindungsbereichs (39) abstehende Lüfterflügel (41), die regelmäßig entlang eines Kreises um die Verbindungsachse (37) herum verteilt sind.

3. Verbindungselement (17) nach einem der vorhergehenden Ansprüche,
**dadurch gekennzeichnet, dass** jeder Lüfterflügel (41) im Wesentlichen die Form eines Prismas mit einer dreieckigen Grundfläche, die senkrecht von der Außenseite (47) des Verbindungsbereichs (39) absteht, hat.

4. Verbindungselement (17) nach einem der vorhergehenden Ansprüche,
**dadurch gekennzeichnet, dass** jede Stirnseite (43, 45) des Verbindungsbereichs (39) wenigstens eine Kopplungsaussparung (51) aufweist, die radial von der Innenseite (49) zu der Außenseite (47) des Verbindungsbereichs (39) verläuft.

5. Verbindungselement (17) nach Anspruch 4,
**dadurch gekennzeichnet, dass** jede Stirnseite (43, 45) des Verbindungsbereichs (39) genau zwei sich radial gegenüberliegende Kopplungsaussparungen (51) aufweist.

6. Verbindungselement (17) nach Anspruch 5,
**dadurch gekennzeichnet, dass** die beiden Kopplungsaussparungen (51) einer ersten Stirnseite (43) um 90 Grad gegenüber den Kopplungsaussparungen (51) der zweiten Stirnseite (45) versetzt sind.

7. Verbindungselement (17) nach einem der Ansprüche 4 bis 6,
**dadurch gekennzeichnet, dass** jede Kopplungsaussparung (51) eine axiale Tiefe aufweist, die etwa halb so groß wie die axiale Ausdehnung des Verbindungsbereichs (39) ist.

8. Verbindungselement (17) nach einem der Ansprüche 4 bis 7,
**dadurch gekennzeichnet, dass** der Verbindungsbereich (39) wenigstens eine axial verlaufende rillenartige Vertiefung (61) in jeder eine Kopplungsaussparung (51) berandenden Wandung aufweist, die von einer Stirnseite (43, 45) des Verbindungsbereichs (39) ausgeht.

9. Verbindungselement (17) nach einem der vorhergehenden Ansprüche,
**dadurch gekennzeichnet, dass** der Verbindungsbereich (39) wenigstens eine Ausnehmung (63) aufweist, die von einer Stirnseite (43, 45) aus axial und von der Außenseite (47) und von der Innenseite (49) beabstandet verläuft.

10. Verbindungselement (17) nach einem der vorhergehenden Ansprüche,
**dadurch gekennzeichnet, dass** das Verbindungselement (17) einstückig ausgeführt ist.

11. Verbindungselement (17) nach einem der vorhergehenden Ansprüche,
**dadurch gekennzeichnet, dass** das Verbindungselement (17) aus einem Kunststoff gefertigt ist.

12. Motor (1), aufweisend
- eine Motorwelle (5) mit einer Motorwellenlängsachse (23),
- einen Drehgeber (15) zum Erfassen einer Drehstellung und/oder einer Drehzahl der Motorwelle (5), wobei der Drehgeber (15) eine Geberwelle (19) mit einer Geberwellenlängsachse (25) aufweist,
- und ein gemäß einem der vorhergehenden Ansprüche ausgebildetes Verbindungselement (17), das ein geberwellenseitiges Motorwellenende (33) der Motorwelle (5) und ein motorwellenseitiges Geberwellenende (35) der Geberwelle (19) miteinander verbindet, indem es jeweils formschlüssig mit dem Motorwellenende (33) und mit dem Geberwellenende (35) verbunden ist, wobei eine erste Stirnseite (43) des Verbindungsbereichs (39) des Verbindungselements (17) der Motorwelle (5) zugewandt ist, die zweite Stirnseite (45) des Verbindungsbereichs (39) des Verbindungselements (17) dem Drehgeber (15) zugewandt ist und die Verbindungsachse (37) des Verbindungselements (17) mit der Motorwellenlängsachse (23) und der Geberwellenlängsachse (25) zusammenfällt.

13. Motor (1) nach Anspruch 12,
**dadurch gekennzeichnet, dass** jede Stirnseite (43, 45) des Verbindungsbereichs (39) wenigstens eine Kopplungsaussparung (51) aufweist, die radial von der Innenseite (49) zu der Außenseite (47) des Verbindungsbereichs (39) verläuft, das Motorwellenende (33) für jede Kopplungsaussparung (51) der ersten Stirnseite (43) eine radial in die Kopplungsaussparung (51) hineinragende Motorwellennase (57) aufweist und das Geberwellenende (35) für jede Kopplungsaussparung (51) der zweiten Stirnseite (45) eine radial in die Kopplungsaussparung (51) hineinragende Geberwellennase (53) aufweist.
